# EUROPEAN PATENT SPECIFICATION

(11) **EP 2 367 441 B1**
(45) Date of publication and mention of the grant of the patent: **09.07.2014**
(21) Application number: 09753123.0
(22) Date of filing: 19.11.2009
(51) Int. Cl.: A23D 9/00, A23G 9/00, A23G 9/04, A23G 9/24, A23G 9/48, A23G 9/32

(54) **COATING COMPOSITION FOR FROZEN CONFECTIONS**
BESCHICHTUNGSZUSAMMENSETZUNG FÜR GEFRORENES KONFEKT
Composition de revêtement pour confiseries glacées

(30) Priority: 23.12.2008 EP 08172786
(43) Date of publication of application: 28.09.2011
(73) Proprietor: Unilever PLC, London, Greater London EC4Y 0DY (GB); Unilever N.V., 3013 AL Rotterdam (NL)
(72) Inventor: DILLEY, Kevin, Michael, Bedfordshire MK44 1LQ (GB); MCDOUGALL, Mary, Elizabeth, Bedfordshire MK44 1LQ (GB); SMITH, Kevin, Warren, Bedfordshire MK44 1LQ (GB); UNDERDOWN, Jeffrey, Bedfordshire MK44 1LQ (GB)
(74) Representative: Warner, Guy Jonathan
(86) International application number: PCT/EP2009/065448
(87) International publication number: WO 2010/072481

(56) References cited:
- WO-A-03/075672
- WO-A-2008/064962
- KARLSHAMNS AB: "Speciality Fats in Ice Cream production" , [Online] September 2004 (2004-09), pages 1-11, XP002517091 Retrieved from the Internet: URL:http://www.prochem.ch/html/forum/speci ality-fats-ice-cream.pdf> [retrieved on 2009-02-26]
- R.W.HARTEL: "Application of Milk-fat fractions in confectionery products" JOURNAL OF THE AMERICAN OIL CHEMISTS' SOCIETY, vol. 73, no. 8, 1996, pages 945-953, XP002517092
- PALSGAARD: "Troubleshooting Emulsifiers for Ice Cream Coatings" , [Online] 24 May 2006 (2006-05-24), pages 1-3, XP009112959 Retrieved from the Internet: URL:http://www.foodprocessing-technology.c om/contractors/ingredients/palsgaard/press 7.html> [retrieved on 2009-02-26]

## Description

### Technical Field of the Invention

The present invention relates to coating compositions for frozen confections. In particular, it relates to coatings which contain reduced amounts of saturated fat.

### Background to the Invention

Chocolate-coated ice creams or other frozen confections are popular products. The composition of chocolate is defined in most countries so that the major fat component is cocoa butter. Chocolate-like coatings based on other fats are also commonly used. The physical properties of the coating are determined by the crystallization of the fat. An important parameter associated with fat crystallization is the setting time, i.e. the time at which the coating first develops an audible crack on biting.

The most commonly used non-cocoa butter fat is coconut oil. This is because it crystallizes rapidly when it comes into contact with ice cream. It also produces coatings with the required physical properties, in particular it provides "snap" on biting, has a short setting time and makes the coating firm so that it resists deformation and / or surface marking after production, for example during packaging or storage. However, coconut oil has the disadvantage that approximately 90% of its fatty acids are saturated. Typically the fat content of a coating composition is up to about 60 wt%, so that the coating has a saturated fat (SAFA) content of about 55 wt%.

Consumers are now looking for frozen confections which have all the properties of traditional products but which are healthier. One concern that consumers have is that eating saturated fats increases the risk of coronary heart disease and stroke. Therefore attempts have been made to produce fat-based coatings for frozen confections using fats with lower saturated fatty acid contents. However, this is difficult because a number of different interacting criteria must be satisfied simultaneously. Simply replacing saturated fats with unsaturated fats provides the health benefit, but at the expense of the physical properties, in particular the firmness. This is because oils that contain unsaturated fatty acids melt at lower temperatures than coconut oil, i.e. they are more liquid. This results in coatings which have less "snap", are softer and therefore more susceptible to deformation, and also have longer setting times. The mass of the coating per product also depends on the physical properties of the fat, in particular the viscosity of the coating composition. It is important to control the amount of coating because it is a costly part of the final product; it is also necessary to provide the thickness of coating preferred by consumers. Moreover, the coating must not be too thin in order to prevent "pinholing" i.e. the formation of small holes in the coating.

US 5 939 114 discloses ice cream coating compositions with reduced SAFA contents based on mixtures of palm oil fractions such as palm mid fraction. WO 03 / 75672 discloses coating compositions comprising a soft palm mid fraction.

US 2008 / 131564 discloses coating compositions comprising from 40 to 60 wt% of a fat component which has a SAFA content of no more than 33%. The fat component is a mixture of fractionated palm oil (e.g. palm mid fraction) and a liquid oil such as canola oil, sunflower oil, soybean oil or corn oil. While the coating has a reduced SAFA content, we have found that this can create another problem, namely an increase in the amount of coating per product. Thus although the amount of SAFA expressed as a percentage of the fat in the coating composition is reduced, a corresponding reduction in the absolute amount of SAFA per product is not obtained due to the overall increase in the total amount of coating, and hence total amount of fat. Therefore there still remains a need for improved fat-based coating compositions for frozen confections.

### Brief Description of the Invention

We have now developed coating compositions for frozen confections that give reduced amount of saturated fat per coated product whilst retaining the desired physical properties. Surprisingly, we have found that the amount of SAFA per product can be reduced whilst retaining the desired physical properties by increasing the amount of fat in the coating composition, provided that certain types of fat are used in particular amounts. Accordingly, in a first aspect, the present invention provides a composition for coating a frozen confection, the composition comprising from 63 to 70 wt% of a fat component comprising:
- 70 to 92 wt% of a palm oil fraction wherein the palm oil fraction is a palm mid-fraction or blends of palm mid fractions which contains at most 8 wt% of S₃ triglycerides and which has a S₂U:SU₂ ratio of > 2.5;
- 8 to 15% of a liquid oil having a solid fat content of less than 5% at 2.0°C, measured by pulse NMR spectroscopy; and
- 0 to 15% of cocoa butter.

Preferably the composition comprises from 64 to 68 wt% of the fat component.

Preferably the palm oil fraction constitutes at least 85 wt% of the fat component.

Preferably the liquid oil is sunflower oil, olive oil, soybean oil, rapeseed oil, corn oil, cottonseed oil, groundnut oil or a mixture thereof.

Preferably the liquid oil constitutes from 8 to 12 wt% of the fat component.

Preferably the cocoa butter is present in an amount of less than 5 wt% of the fat component.

In a second aspect the present invention provides a process for producing a coated frozen confection, the process comprising providing a coating composition according to the first aspect of the invention, and then coating a frozen confection with the composition.

In a third aspect, the present invention provides a frozen confection coated with a composition according to the first aspect of the invention.

Preferably the thickness of the coating layer is from 0.5 to 5 mm.

Preferably the frozen confection is ice cream.

### Detailed Description of the Invention

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic/ Plenum Publishers, New York 2003.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, water ice, frozen yoghurt and the like.

Coating composition means a fat-based edible material which can be used to form a coating layer on a frozen confection. Such compositions include chocolate analogues (sometimes called couvertures) which are made using fats other than cocoa butter. In addition to the fat, the coating compositions may contain cocoa solids (e.g. in an amount of from 5 to 20% by weight of the coating composition, preferably 8 to 15%), non-fat milk solids (e.g. in an amount of up to 30% by weight of the coating composition, preferably 5% to 20%), sugar or other sweeteners (e.g. in an amount of from 10 to 35% by weight of the coating composition, preferably 15 to 30%), emulsifiers (e.g. in an amount of 0.1 to 2% by weight of the coating composition, preferably 0.2 to 1%) and flavourings. The emulsifier may be any emulsifier suitable for use in chocolate, couverture or other fat-based coatings, for example ammonium phosphatide, sunflower lecithin, soya lecithin or polyglycerol polyricinoleate (PGPR) which is obtainable from Quest International under the trade name Admul Wol. Cocoa solids are usually provided in the form of cocoa powder, which consists of about 90% cocoa solids and about 10% cocoa butter, or cocoa liquor, which consists of about 50% cocoa solids and 50% cocoa butter.

Fats are generally triglycerides, i.e. triesters of glycerol and fatty acids. The term "fat" as used herein includes both liquid oils and solid fats. Triglycerides are classified according to the number of saturated (denoted S) and unsaturated (denoted U) fatty acid residues they contain, i.e. S₃ (triglycerides with three saturated fatty acids), S₂U (two saturated and one unsaturated); SU₂ (one saturated and two unsaturated); and U₃ (three unsaturated). This notation does not distinguish between the alternative possible positions for the fatty acids in the triglyceride. Natural sources of fats, for example coconut oil, palm oil, cocoa butter and sunflower oil are mixtures of triglycerides. The relative amounts of S₃, S₂U, SU₂ and U₃ triglycerides depend on the type of fat. The amount of saturated fat in a fat or a blend of fats is the percentage (by weight of the fat) of saturated fatty acids.

The triglyceride composition (in terms of S₃, S₂U, SU₂ and U₃) can be determined using an Agilent 6890+ gas chromatography system with automated on column injection onto a capillary column with flame ionization detection and oven track injection mode. A Quadrex 15m, 0.25mm internal diameter, 0.1m film 65% phenyl-methyl silicone gas chromatography column is used. Fats are dissolved in iso-octane at a concentration of around 0.3mg/mL (0.25-0.50 mg/mL) and a volume of 0.1µL is injected using the Agilent nano adaptor set to ON with 1µL volume setting. The carrier gas is helium, at a constant flow of 1ml/minute (initial linear velocity ∼30cm/s). The oven program is as follows: hold at 80°C for 0.5 minutes, ramp to 330°C at 50°C/minute, triglyceride separation from 330°C to 350°C ramping at 1°C/minute. Calibration is by reference to standard triglyceride carbon number data, which is acquired using a Quadrex 10m 0.53mm internal diameter 0.1µm film methyl-5%phenyl capillary gas chromatography column. The column is fitted into a Perkin Elmer AutoXL system with a programmable temperature vaporising injector configured in direct on-column mode. The oven program is: ramp from 200°C to 325°C at 10°C/minute, and then from 325°C to 355°C at 5°C/minute. The carrier gas is helium at typically 40kPa.

The fats used in the coating compositions of the present invention comprise a palm oil fraction, a liquid oil and may also comprise cocoa butter. The fat component constitutes at least 63% by weight of the composition, preferably at least 64%; and at most 70%, preferably at most 68%. The compositions have a saturated fatty acid content of from 30 to 40% by weight of the composition, preferably from 34-36%.

Unfractionated palm oil consists of about 9% S₃, 48% S₂U, 36% SU₂ and 6% U₃. Palm oil is generally fractionated into three fractions: palm stearin fraction, which is enriched in S₃ triglycerides; palm mid-fraction which is enriched in S₂U and palm olein fraction, which contains much of the SU₂ and U₃ triglycerides. Palm oil fractions and blends of fractions which are suitable for use in the present invention contain S₃ triglycerides in an amount of less than 8% (by weight of the palm oil fraction), preferably less than 7% more preferably less than 5%. They also have an S₂U: SU₂ ratio of > 2.5, preferably > 3.0, more preferably > 3·5. Suitable fractions therefore include palm mid-fractions such as Creamelt 700 and Creamelt 900, produced by Loders Croklaan; othersuppliers of palm mid fractions include Britannia Foods, Premium Vegetable Oils (Malaysia) and Lam Soon (Thailand). Blends of palm mid fractions and up to about 45% palm olein fraction (depending on the precise triglyceride composition of the fractions) meet the above criteria and therefore may also be used. Thus the term "palm oil fraction" includes blends / mixtures of two or more palm oil fractions. Preferably the blend contains up to 40%, more preferably up to 20% (by weight of the blend) of palm olein fraction.

The palm oil fraction is present in an amount of at least 70%, preferably at least 85% and most preferably at least 90% by weight of the fat component; and at most 92%.

The term "liquid oil" means an oil that has a solid fat content of less than 5% at 20°C, measured by pulse NMR spectroscopy as follows. The fat or fat blend is first heated to 80°C and then held at 60°C four 30 minutes, so that the fat is completely melted. It is then cooled to and held at 0°C for one hour. It is then warmed to 20°C (the measurement temperature) and held for 30 minutes. The amount of solid fat is then measured with a standard pulse NMR technique using a NMS 120 Minispec NMR spectrometer.

Suitable liquids oils that may be used include sunflower oil (including high oleic sunflower oil), safflower oil (including high oleic safflower oil), olive oil, linseed oil, soybean oil, rapeseed oil, walnut oil, corn oil, grape seed oil, sesame oil, wheat germ oil, cottonseed oil, fish oil, almond oil, perilla oil, water melon seed oil, rice oil, groundnut oil, pistachio oil, hazelnut oil and mixtures or fractions thereof. Most preferably the liquid oil is sunflower oil and / or rapeseed oil.

The liquid oil is present in an amount of at least 8% by weight of the fat component; and at most 15%, preferably at most 12%, most preferably less than 10%.

Cocoa powder contains typically about 11 % fat (i.e. cocoa butter) and cocoa liquor contains typically about 50% fat. Thus when the coating compositions comprise cocoa powder or cocoa liquor, some cocoa butter is present. The cocoa butter comprises at most 15%, preferably less than 5%, more preferably less than 2% by weight of the fat component.

Coating compositions are applied to the frozen confection as liquids, but solidify when they are cooled down, for example as a result of contact with the frozen confection. Fat-based coating compositions have complex solidification behaviour because they contain mixtures of different triglycerides which can crystallize in different forms.

Coated stick products have been known for many years. They can be produced by an "extrude and cut" process, in which ice cream or other frozen confection from an ice cream freezer is extruded vertically downwards though a nozzle onto a conveyor. Sticks are inserted as the ice cream comes out of the nozzle and a heated wire cuts it horizontally into uniform portions of the required thickness. The conveyor carries the ice cream through a hardening tunnel where its temperature is reduced to about -25°C. Alternatively, they may be produced by a moulding process, where ice cream is drawn from the freezer and filled into moulds which are subsequently immersed in a cold liquid, such as brine. Sticks are inserted before the ice cream is fully frozen. Products are then removed from the moulds and may be hardened.

After hardening, the ice cream stick is picked up by a stick gripper (e.g. sets of tongs mounted on a carriage frame). Liquid coating, for example chocolate or a chocolate analogue is held in a dipping tank at around 30-50°C. The stick gripper transfers the ice cream to the dipping tank, where it is lowered into the liquid coating for a certain time, and then removed. The dipping time, the ice cream temperature, the viscosity of the liquid coating and the crystallization properties of the fat determine the thickness of the coating layer deposited on the ice cream pieces. If the dipping time is too short, the ice cream too warm, or the liquid coating viscosity too low, the coating may be incomplete. The reverse of these can result in a coating that is too thick. Typically the coating layer is from 0.5 to 5mm thick, preferably from 0.75 to 3mm; coatings in this range of thickness are liked by consumers.

Other coating processes are also known, for example enrobing and spraying. These are suitable for products which do not have sticks. In the enrobing process, portions of hardened frozen confection are conveyed on a mesh belt to an enrober where they pass through one or more waterfalls of coating composition, known as curtains. The excess coating is then removed, for example by blowing it off with an air knife. Finally the conveyer transports the bar through a pool of the coating composition thereby immersing the bottom of the bar to ensure that the underside is also coated.

After coating, the coating composition begins to solidify on the cold ice cream. Within a few seconds the liquid coating becomes dry to the touch and has plastic or leathery texture. This arises from partial crystallization of the fat. Crystallization continues slowly, and it may take several hours for the coating to reach its maximum brittleness.

The present invention will now be further described with reference to the following examples which are illustrative only and not limiting.

### Examples

Coating compositions were made using the formulations given in Table 1. Examples A-E are comparative examples and examples 1 to 3 are according to the invention. The palm mid fraction used was Creamelt 700, obtained from Loders Croklaan. The cocoa powder and cocoa liquor contained 10-12% and 55% cocoa butter respectively.

**Table 1**

| **Example** | **A** | **B** | **C** | **D** | **E** | **1** | **2** | **3** |
|---|---|---|---|---|---|---|---|---|
| **Ingredient (wt %)** | | | | | | | | |
| Sugar | 25.8 | 25.8 | 19.8 | 25.4 | 25.4 | 19.8 | 22.8 | 21.2 |
| Cocoa powder | 13.0 | 13.0 | 10.0 | | | 10.0 | 11.5 | 10.7 |
| Cocoa liquor | | | | 11.1 | 11.1 | | | |
| Skim milk powder | 1.7 | 1.7 | 1.3 | | | 1.3 | 1.5 | 1.4 |
| Whey (12% protein) | | | | 8.3 | 8.3 | | | |
| Ammonium phosphatide | 0.3 | 0.3 | 0.3 | 0.54 | 0.54 | 0.3 | 0.3 | 0.3 |
| Vanillin | | | | 0.02 | 0.02 | | | |
| Coconut oil | 59.2 | | | | | | | |
| Palm mid fraction | | 59.2 | 68.6 | 35.4 | 49.1 | 58.6 | 57.9 | 59.8 |
| Rapeseed oil | | | | 19.1 | 5.5 | | | 6.6 |
| Sunflower oil | | | | | | 10.0 | 6.0 | |

The coatings were prepared in 1.5kg batches as follows. First, the emulsifier was added to the oil at 45°C. The dry ingredients were blended together, and then half of the fat / emulsifier mixture was added to form a slurry. The slurry was put into a laboratory scale ball mill (supplied by Leatherhead Food RA) operating at approximately 60 rpm. The balls (equal volumes of balls of 9mm, 11mm, 14mm, and 17mm diameter) were at a temperature of 50°C. The slurry was milled and the particle size was measured at regular intervals using a Draper external digital micrometer. Once the particle size had been reduced to less than 23 µm (typically after about 4-5 hours), the remainder of the oil / emulsifier was added in to the slurry, and the ball mill was run for a further 15 minutes. Finally, the coating composition was removed from the ball mill, placed in a suitable container, and stored in an oven at 50°C.

The viscosity of each coating composition was then measured using an AR₂₀₀₀ rheometer (TA Instruments Ltd.) using a vane and serrated cup geometry (cup diameter = 30mm, depth = 80mm; 4 vane rotor: width = 15mm, length = 38mm, immersed to within 30mm of the cup base). The sample was held at 50°C for 30 minutes, then cooled in the instrument to the measuring temperature of 30°C and held for 10 minutes before measurement. A stepped flow measurement was used: the shear stress was ramped from 0.1Pa to 15Pa in log mode with 20 points per decade, 20 seconds constant time. The measured stress / strain data was analysed using the inbuilt data analysis functions and applying the Casson function. This gives values for the yield stress and Casson viscosity, which enable viscosity values to be calculated at strain rates of interest.

The brittleness of the coating compositions was measured using an Instron universal testing machine (type 5500R). First, thin strips of the coating composition (2mm deep, 50mm long and 10 mm wide) were made using a silicone rubber mould. The mould was placed on a sheet of acetate and pressed firmly to form a seal. This was then placed on top of a stainless steel disc. 1cm³ of the coating composition was dosed into the mould. Taking care not to incorporate any air bubbles, another sheet of acetate was placed on top of the silicon mould and then another metal disc was placed on top. The moulds were then held in a freezer-25_{°}C overnight. The strips were de-moulded by removing the top disc and sheet of acetate, and then carefully peeling off the silicone rubber mould. The strips were left to equilibrate for 1 week at -25°C and then overnight at -18°C before testing. For each composition, 14 strips were produced to ensure that at least 10 samples could be tested.

Three-point bend tests were performed on the strips as described for example on pages 120-121 of "The Science of Ice Cream", C. Clarke, Royal Society of Chemistry, 2004, using three bars of circular cross-section, 5mm in diameter, to apply the load. The bars were placed at right angles to the sample, two above the sample spaced 30mm apart, and one below it. Each strip was placed centrally on the lower bar and held in place against the upper bars. The lower bar was then moved upwards at a speed of 10mm / minute, using a 100N load cell. The samples were enclosed in a temperature controlled cabinet at -18°C during testing (i.e. the normal storage temperature for frozen confections). The resulting force-displacement curves were used to determine the yield strain and yield stress of each strip, and the mean values were calculated for each composition. Brittle coatings exhibit low yield strains, i.e. less than 6%, preferably less than 5%. Firm coatings have high values of the yield stress i.e. greater than 10MPa, preferably greater than 15MPa. Firm, brittle coatings have resistance to damage after coating and good snap on consumption.

Ice cream was prepared using the formulation given in Table 2. The ingredients were blended with hot water, then homogenized, pasteurized and aged for at least 2 hours. The mix was then frozen and aerated to an overrun of 90% in a standard ice cream freezer (scrape surface heat exchanger). The partially frozen ice cream was drawn from the freezer at a temperature of about -3°C and then filled into moulds. The moulds were placed in a brine bath at a temperature of-39°C to further freeze the ice cream. A stick was placed into each ice cream before it had completely frozen. The moulds were then immersed in water at +34°C so that the ice creams could be removed. Finally the ice creams were wrapped, blast frozen at -40°C and stored at - 28°C. The resulting ice cream products had dimensions of 97mm (length) x 13mm (average thickness), tapered in width from 49mm at the bottom to 42mm at the top, and weighed 36g (± 2g).

**Table 2**

| **Ingredient** | **wt%** |
|---|---|
| Butter oil | 6.55 |
| Sucrose | 10.8 |
| 63 DE Corn syrup (78% solids) | 7.70 |
| Skim milk concentrate (35% solids) | 27.0 |
| Cream (36% fat) | 4.59 |
| Sodium Alginate E401 | 0.23 |
| HP60 mono/diglyceride E471 | 0.30 |
| Vanilla flavour | 0.075 |
| Water | To 100 |

Before dipping in one of the coating compositions, each ice cream portion was weighed (to the nearest tenth of a gram), and tempered at -18°C for at least 18 hours. The coating composition was removed from the oven and stirred thoroughly. It was then poured into a container and placed in a water bath for 30 minutes to equilibrate to 30±1°C. The composition was stirred thoroughly with a spatula before ice creams were dipped. The ice cream portion was held by its stick and dipped into the coating composition so that the ice cream was completely immersed, and immediately removed. It was held above the container to allow the excess coating composition to drain off under gravity. No pinholing was observed for any of the samples. Once the coating was dry to the touch (normally after at least 10 seconds) the coated ice cream was weighed again. The weight of the coating composition was calculated by subtracting the weight before dipping from the weight after dipping.

Table 3 summarises the fat composition and physical properties of the coatings.

**Table 3**

| | **A** | **B** | **C** | **E** | **D** | **1** | **2** | **3** |
|---|---|---|---|---|---|---|---|---|
| % fat in coating | 60.6 | 60.6 | 69.4 | 60.3 | 60.3 | 69.4 | 65.0 | 67.5 |
| % liquid oil in fat | - | - | - | 9.1 | 31.8 | 14.6 | 9.4 | 9.9 |
| % SAFA in composition | 55.3 | 35.2 | 40.3 | 32.4 | 25.4 | 35.7 | 35.0 | 35.9 |
| Pick-up weight (g) | 10.2 | 13.0 | 11.1 | 14.1 | 13.0 | 10.9 | 11.8 | 11.6 |
| SAFA per product* (g) | 5.6 | 4.6 | 4.5 | 4.6 | 3.3 | 3.9 | 4.1 | 4.2 |
| Viscosity at 30°C (Pas) | 0.17 | 0.24 | 0.15 | 0.19 | 0.18 | 0.15 | 0.16 | 0.15 |
| Yield stress (MPa) | 22.1 | 18.6 | 18.2 | 16.2 | 9.6 | 13.9 | 18.7 | 17.5 |
| Yield strain (%) | 2.5 | 2.5 | 3.5 | 4.6 | 8.0 | 5.1 | 5.1 | 4.1 |

| | | | | | | | | |
|---|---|---|---|---|---|---|---|---|
| * This does not include the SAFA present in the ice cream. | | | | | | | | |

Comparative example A is a conventional coating composition based on coconut oil. This has a high yield stress and a low yield strain, indicating a firm coating with good snap. However, the coating contains a high amount of SAFA, namely 5.6g (per product, not counting SAFA from the ice cream). Comparative example B demonstrates the effect of replacing the coconut oil with palm mid-fraction, which has a lower SAFA content. Again, the coating is firm and brittle. However, the viscosity of the composition is higher, so the pick-up weight is greater. Thus the SAFA content of the coating per product is reduced, but not by as much as would have been expected. One way to reduce the viscosity of the coating composition, and hence the pick-up weight, is to increase the amount of fat in the coating composition - and correspondingly reduce the amount of the other ingredients such as sugar, cocoa solids etc. This is demonstrated in example C; however, although the viscosity and pick-up weight decrease compared to example B, the increased amount of fat in the composition results in only a slightly reduced amount of SAFA per product. (The viscosity could also be reduced by raising the temperature of the coating composition; however, this can cause pinholing and is therefore not suitable). It is apparent from the data shown in Table 3 that the viscosity alone does not determine the pick-up weight, but the nature of the fat, e.g. its crystallization properties, is also important.

Examples E and D reproduce coating compositions disclosed in US 2008 / 131564, i.e. based on mixtures of palm mid fraction and a liquid oil which have 60% total fat (including the cocoa butter present in the cocoa liquor). The liquid oil makes up 9.1% and 31.8% respectively of the total fat. Although the composition of Example E contains only 32.4% SAFA, the pick-up weight is high, and hence the amount of SAFA per product is similar to that of examples B and C. The composition of Example D contains a higher amount of liquid oil, and hence has a low amount of SAFA per product despite the high pick-up weight. However, it has a low yield stress and a high yield strain, and it is not sufficiently firm and brittle.

In examples 1 to 3, the coating compositions contain increased amounts of fat (65 to 70%, compared to the conventional amount of about 60%). By using a blend of palm mid fraction and a liquid oil, the SAFA content of the fat and the pick-up weight are simultaneously reduced, resulting in a lower amount of SAFA per coated product, i.e. approximately 49, compared to 5.6g for example A (coconut oil), and 4.59 for examples B, C (palm mid fraction alone) and D (mixture of palm mid fraction and rapeseed oil at 60% total fat). Each of examples 1 - 3 has a low yield strain and a relatively high yield stress, indicating good brittleness and firmness (i.e. "snap"). Thus examples 1 to 3 demonstrate that, contrary to what might be expected, the SAFA content per product can be reduced by actually increasing the amount of fat in the coating composition, provided that the fats are selected as described above.

The various features of the embodiments of the present invention referred to in individual sections above apply, as appropriate, to other sections *mutatis mutandis.* Consequently features specified in one section may be combined with features specified in other sections as appropriate.

## Claims

1. A composition for coating a frozen confection, the composition comprising from 63 to 70 wt% of a fat component comprising:
• 70 to 92 wt% of a palm oil fraction wherein the palmoilfrattion is a palm mid-fraction or blends of palm mid fractions which contains at most 8 wt% of S₃ triglycerides and has a S₂U: SU₂ ratio of > 2.5;
• 8 to 15% of a liquid oil having a solid fat content of less than 5% at 20°C, measured by pulse NMR spectroscopy; and
• 0 to 15% of cocoa butter.

2. A composition according to claim 1 wherein the composition comprises from 64 to 68 wt% of the fat component.

3. A composition according to claim 1 or claim 2 wherein the palm oil fraction constitutes at least 85 wt% of the fat component.

4. A composition according to any of claims 1 to 3 wherein the liquid oil is sunflower oil, olive oil, soybean oil, rapeseed oil, corn oil, cottonseed oil, groundnut oil or a mixture thereof.

5. A composition according to any of claims 1 to 4 wherein the liquid oil constitutes from 8 to 12 wt% of the fat component.

6. A composition according to any of claims 1 to 5 wherein the cocoa butter is constitutes less than 5 wt% of the fat component.

7. A composition according to any of claims 1 to 6 which comprises from 10 to 35 wt% sugar.

8. A composition according to any of claims 1 to 7 which comprises 0.1 to 2 wt% of an emulsifier selected from ammonium phosphatide, sunflower lecithin, soya lecithin and polyglycerol polyricinoleate.

9. A composition according to any of claims 1 to 8 which comprises from 5 to 20 wt% cocoa solids.

10. A composition according to any of claims 1 to 9 which comprises from 5 to 20 wt% non-fat milk solids.

11. A process for producing a coated a frozen confection, the process comprising providing a coating composition according to any of claims 1 to 10, and then coating a frozen confection with the composition.

12. A frozen confection coated with a composition according to any of claims 1 to 10.

13. A frozen confection according to claim 12 wherein the thickness of the coating is from 0.5 to 5mm.

14. A frozen confection according to claim 12 or claim 13 wherein the frozen confection is ice cream.

## Patentansprüche

1. Zusammensetzung zum Überziehen von gefrorenem Konfekt,
wobei die Zusammensetzung 63 bis 70 Gew.-% einer Fettkomponente aufweist, die Folgendes aufweist:
• 70 bis 92 Gew.-% einer Palmölfraktion, wobei die Palmölfraktion eine mittlere Palmfraktion oder Gemische mit mittleren Palmfraktionen ist, die höchstens 8 Gew.-% S₃-Triglyceride enthält und ein Verhältnis von S₂U:SU₂ von > 2,5 aufweist.
• 8 bis 15 Gew.-% eines flüssigen Öls mit einem Gehalt an festen Fetten bei 20 °C von weniger als 5 % und zwar durch gepulste NMR-Spektroskopie gemessen; und
• 0 bis 15 % Kakaobutter.

2. Zusammensetzung nach Anspruch 1,
wobei die Zusammensetzung 64 bis 68 Gew.-% der Fettkomponente aufweist.

3. Zusammensetzung nach Anspruch 1 oder 2,
wobei die Palmölfraktion mindestens 85 Gew.-% der Fettkomponente darstellt.

4. Zusammensetzung nach einem der Ansprüche 1 bis 3,
wobei das flüssige Öl Sonnenblumenöl, Olivenöl, Sojaöl, Rapsöl, Maisöl, Baumwollsamenöl, Erdnussöl oder ein Gemisch davon ist.

5. Zusammensetzung nach einem der Ansprüche 1 bis 4,
wobei das flüssige Öl 8 bis 12 Gew.-% der Fettkomponente ausmacht.

6. Zusammensetzung nach einem der Ansprüche 1 bis 5,
wobei die Kakaobutter weniger als 5 Gew.-% der Fettkomponente ausmacht.

7. Zusammensetzung nach einem der Ansprüche 1 bis 6,
die 10 bis 35 Gew.-% Zucker aufweist.

8. Zusammensetzung nach einem der Ansprüche 1 bis 7,
die 0,1 bis 2 Gew.-% eines Emulgators aufweist, der aus Ammoniumphosphatid, Sonnenblumenlecithin, Sojalecithin und Polyglycerolpolyricinoleat ausgewählt ist.

9. Zusammensetzung nach einem der Ansprüche 1 bis 8,
die 5 bis 20 Gew.-% Kakaofeststoffe aufweist.

10. Zusammensetzung nach einem der Ansprüche 1 bis 9,
die 5 bis 20 Gew.-% fettfreie Milchfeststoffe aufweist.

11. Verfahren zum Herstellen eines überzogenen gefrorenen Konfekts,
wobei das Verfahren das Bereitstellen einer Beschichtungszusammensetzung nach einem der Ansprüche 1 bis 10 und das anschließende Überziehen eines gefrorenen Konfekts mit der Zusammensetzung aufweist.

12. Gefrorenes Konfekt, das mit einer Zusammensetzung nach einem der Ansprüche 1 bis 10 überzogen ist.

13. Gefrorenes Konfekt nach Anspruch 12,
wobei die Dicke des Überzugs 0,5 bis 5 mm beträgt.

14. Gefrorenes Konfekt nach Anspruch 12 oder 13,
wobei das gefrorene Konfekt Eiscreme ist.

## Revendications

1. Composition pour enrober une confiserie glacée, la composition comprenant de 63 à 70 % en poids d'un composant gras comprenant :
• 70 à 92 % en poids d'une fraction d'huile de palme dans laquelle la fraction d'huile de palme est une fraction intermédiaire d'huile de palme ou des mélanges de fractions intermédiaires d'huile de palme qui contient au plus 8 % en poids de triglycérides S₃ et ont un rapport S₂U:SU₂ > 2,5 ;
• 8 à 15 % d'une huile liquide ayant une teneur en matières grasses solides, mesurée par spectroscopie par RMN à impulsion, inférieure à 5 % à 20 °C ; et
• 0 à 15 % de beurre de cacao.

2. Composition selon la revendication 1 dans laquelle la composition comprend de 64 à 68 % en poids de composant gras.

3. Composition selon la revendication 1 ou la revendication 2 dans laquelle la fraction d'huile de palme constitue au moins 85 % en poids du composant gras.

4. Composition selon l'une quelconque des revendications 1 à 3 dans laquelle l'huile liquide est l'huile de tournesol, l'huile d'olive, l'huile de soja, l'huile de colza, l'huile de maïs, l'huile de coton, l'huile d'arachide, ou un mélange de celles-ci.

5. Composition selon l'une quelconque des revendications 1 à 4 dans laquelle l'huile liquide constitue de 8 à 12 % en poids du composant gras.

6. Composition selon l'une quelconque des revendications 1 à 5 dans laquelle le beurre de cacao constitue moins de 5 % en poids du composant gras.

7. Composition selon l'une quelconque des revendications 1 à 6 qui comprend de 10 à 35 % en poids de sucre.

8. Composition selon l'une quelconque des revendications 1 à 7 qui comprend de 0,1 à 2 % en poids d'un émulsifiant choisi parmi le phosphatide d'ammonium, la lécithine de tournesol, la lécithine de soja et le polyricinoléate de polyglycérol.

9. Composition selon l'une quelconque des revendications 1 à 8 qui comprend de 5 à 20 % en poids de matière sèche de cacao.

10. Composition selon l'une quelconque des revendications 1 à 9 qui comprend de 5 à 20 % en poids de matière sèche de lait écrémé.

11. Procédé de production d'une confiserie glacée enrobée, le procédé comprenant la fourniture d'une composition d'enrobage selon l'une quelconque des revendications 1 à 10, puis l'enrobage d'une confiserie glacée avec la composition.

12. Confiserie glacée enrobée avec une composition selon l'une quelconque des revendications 1 à 10.

13. Confiserie glacée selon la revendication 12 dans laquelle l'épaisseur de l'enrobage est de 0,5 à 5 mm.

14. Confiserie glacée selon la revendication 12 ou la revendication 13 dans laquelle la confiserie glacée est une crème glacée.
